# EUROPEAN PATENT APPLICATION

(11) **EP 4 786 924 A1**
(43) Date of publication of application: **05.08.2026**
(21) Application number: 25155035.6
(22) Date of filing: 30.01.2025
(51) Int. Cl.: G01C 21/36, G01C 21/00

(54) **A METHOD FOR OPERATING A VEHICLE EQUIPPED WITH AN AUTOMATED DRIVING SYSTEM**

(71) Applicant: Zenseact AB, 417 56 Göteborg (SE)
(72) Inventor: VINKÅS, Jakob, 411 35 Göteborg (SE); LOFTER, Per, 444 61 Stora Höga (SE)
(74) Representative: Zacco Sweden AB

(57) **Abstract**

The herein disclosed technology relates to a computer-implemented method (100) for operating a vehicle equipped with an automated driving system, ADS. The method (100) comprises: obtaining (S102) a high definition, HD, map of a region based on a current position of the vehicle, the HD map comprising geometry data describing a geometry of a plurality of lane segments making up the road network within the region, wherein the HD map further comprises first lane connectivity data indicative of a first lane connectivity between the plurality of lane segments, derived at least partly based on the geometry data; obtaining (S104) a lane connectivity layer associated with the region, wherein the lane connectivity layer comprises second lane connectivity data indicative of a second lane connectivity between at least a subset of the plurality of lane segments of areas in the region associated with one or more potential errors in the HD map; identifying (S106) a mismatch between the first lane connectivity and the second lane connectivity in an area of the region, based on a comparison between the HD map and the lane connectivity layer; and in response to identifying the mismatch, performing (S108) path-planning for the ADS in the area based on the second lane connectivity of the second lane connectivity data in combination with at least a part of the HD map of the area.

## Description

### TECHNICAL FIELD

The present disclosed technology relates to the field of automated driving systems. In particular, it is related to methods and devices for operating a vehicle equipped with an automated driving system.

### BACKGROUND

Autonomous or semi-autonomous vehicles typically depend on high-definition (HD) maps to navigate their environments with precision. HD maps provide detailed and precise information about the driving environment including road infrastructure such as lane geometry, lane boundaries, traffic signals or other signage, intersection layouts, etc. These maps enable key functionalities such as vehicle localization, path planning, and decision-making by serving as a high-fidelity representation of the static environment to complement the vehicle's onboard sensor systems.

However, it is a known problem that HD maps are not always correct. Errors in the HD map may for instance arise due to changes in the real-world, which makes the HD map outdated. For example, changes to road layouts due to road works, lane reconfigurations, changes in traffic regulations, newly installed traffic signs, or temporary obstructions, can create discrepancies between the HD map and the real world. Discrepancies can also be caused by sensor inaccuracies or other errors during the creation of the HD map. Errors in the HD map may compromise the vehicle's ability to localize itself correctly, plan an optimal path, or make good decisions.

There are however significant challenges in the time and effort that is required to update and validate HD maps following changes in the real world. Updating HD maps typically involves collecting large amounts of sensor data (e.g. from purpose-built mapping vehicles), processing this data to detect the changes, and validating these updates to ensure their accuracy. This process is both time-consuming and resource-intensive, often resulting in delays before updated maps are available to autonomous vehicles. During this lag, vehicles either relies on outdated or incomplete map data, increasing the risk of navigation errors and degraded driving behavior (e.g. due to overly conservative decision-making), or deactivating the functions that rely on the HD map and instead requiring the driver to operate the vehicle in manual mode.

Current approaches attempt to mitigate the impact of HD map inaccuracies by integrating real-time sensor data from a perception system of the vehicle (including e.g. LiDAR, cameras, and radar), with the HD map to detect and adapt to changes. While these approaches can offer improvements in the immediate surroundings of the vehicle, limited by the sensor range, they do not offer a solution in long term path-planning.

It is therefore need for new and improved solutions for enabling an automated driving system of the vehicle to handle potential errors in the HD map also in the long-term planning. These solutions should enhance adaptability to changes in the real world by providing efficient and desirable operation, even in scenarios where HD maps are outdated or incomplete, while minimizing reliance on frequent updates of the HD map.

### SUMMARY

The herein disclosed technology seeks to mitigate, alleviate or eliminate one or more of the above-identified deficiencies and disadvantages in the prior art to address various problems relating to handling errors in High-Definition (HD) maps, and more specifically in the long-term planning of the autonomous or semi-autonomous vehicle. The disclosed technology at least partly builds upon providing the vehicle with a lane connectivity layer which can indicate whether the lane connectivity of the HD map is correct or not, despite errors in geometry data of the HD map may be present. One reason behind this is that the geometry of a lane can still provide useful information for the operation of the vehicle, even if the lane connectivity is incorrect. Likewise, the lane connectivity of a lane can provide useful information even if the geometry is not perfect. As opposed to the HD map, a lane connectivity layer as such, can more easily be maintained (i.e. kept up to date), without requiring the complicated process of data collection and verification needed to update the HD map itself.

Various aspects and embodiments of the disclosed technology are defined below and in the accompanying independent and dependent claims.

According to a first aspect, there is provided a computer-implemented method for operating a vehicle equipped with an automated driving system, ADS. The method comprises obtaining a high definition, HD, map of a region based on a current position of the vehicle. The HD map comprising geometry data describing a geometry of a plurality of lane segments making up the road network within the region. The HD map further comprises first lane connectivity data indicative of a first lane connectivity between the plurality of lane segments, derived at least partly based on the geometry data. The method further comprises obtaining a lane connectivity layer associated with the region. The lane connectivity layer comprises second lane connectivity data indicative of a second lane connectivity between at least a subset of the plurality of lane segments of areas in the region associated with one or more potential errors in the HD map. The method further comprises identifying a mismatch between the first lane connectivity and the second lane connectivity in an area of the region, based on a comparison between the HD map and the lane connectivity layer. The method further comprises, in response to identifying the mismatch, performing path-planning for the ADS in the area based on the second lane connectivity of the second lane connectivity data in combination with at least a part of the HD map of the area. The second lane connectivity may be used instead of the first lane connectivity. With this aspect of the disclosed technology, similar advantages and preferred features are present as in the other aspects.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect, there is provided a computing device for operating a vehicle equipped with an automated driving system, ADS. The computing device comprising control circuitry. The control circuitry is configured to obtain a high definition, HD, map of a region based on a current position of the vehicle. The HD map comprising geometry data describing a geometry of a plurality of lane segments making up the road network within the region. The HD map further comprises first lane connectivity data indicative of a first lane connectivity between the plurality of lane segments, derived at least partly based on the geometry data. The control circuitry being configured to obtain a lane connectivity layer associated with the region. The lane connectivity layer comprises second lane connectivity data indicative of a second lane connectivity between at least a subset of the plurality of lane segments of areas in the region associated with one or more potential errors in the HD map. The control circuitry being configured to identify a mismatch between the first lane connectivity and the second lane connectivity in an area of the region, based on a comparison between the HD map and the lane connectivity layer. The control circuitry being configured to, in response to identifying the mismatch, perform path-planning for the ADS in the area based on the second lane connectivity of the second lane connectivity data in combination with at least a part of the HD map of the area. With this aspect of the disclosed technology, similar advantages and preferred features are present as in the other aspects.

According to a fourth aspect, there is provided a vehicle. The vehicle being equipped with an automated driving system. The vehicle comprises the computing device according to any embodiment of the third aspect. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that it can enable using HD maps to a greater extent, despite potential errors being present. This is at least partly because of the realization that some parts of the HD map may still provide value, despite incorrect lane connections, if use in combination with the lane connectivity layer presented herein.

An advantage of some embodiments is that path-planning, or other operations relying on an HD map, can be performed more accurately.

An advantage of some embodiments is that it can provide for a quicker and more efficient way of handling potential errors in HD maps, compared to relying on obtaining an updated HD map.

An advantage of some embodiments is that it may lead to earlier detection of changes in the road network, and handle these in an improved manner.

An advantage of some embodiments is that it makes it more feasible to use HD maps created from up-sampling lower-detail maps (such as SD maps) or lower quality maps, which leads to a lower cost in map development and maintenance, since the lane connectivity layer can serve as an easy to manage topology confirmation layer for validating and/or confirming the information in the HD map.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments;
Figure 2 is a schematic illustration of a computing device, in accordance with some embodiments;
Figure 3 is a schematic illustration of a vehicle, in accordance with some embodiments;
Figure 4 is a schematic illustration of a system, in accordance with some embodiments;
Figures 5A to 5C illustrates some aspects of the disclosed technology, by way of a first example;
Figure 6 illustrates some aspects of the disclosed technology, by way of a second example.
Figure 7 illustrates a portion of a road network, by way of example.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first lane connectivity could be termed a second lane connectivity, and, similarly, a second lane connectivity could be termed a first lane connectivity, without departing from the scope of the embodiments. The first lane connectivity and the second lane connectivity are both lane connectivities, but they are not the same lane connectivity.

As used herein, the wording "one or more of" a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

### Overview

The disclosed technology relates to methods and devices for operating a vehicle equipped with an automated driving system, ADS. In particular, for managing potential errors in a High-Definition (HD) map, based on which the vehicle is controlled.

As explained in the foregoing, existing solutions provides techniques for validating that the geometry data of the HD map is correct or not. This can be implemented in a Sensor-map mismatch layer, separate to the HD map. This works for short-term purposes, such as the actual maneuvering of the vehicle in view of the immediate surrounding of the vehicle.

The disclosed technology instead focuses on more long-term purposes, such as path-planning. The operating of the vehicle may thus herein encompass long-term planning of the operation of the vehicle. The disclosed technology can be realized through the use of a lane connectivity layer, which can indicate whether the lane connectivity (or topology) in the HD map is correct or not, and/or what the correct lane connectivity is believed to be. This information can provide added value to the control process of the vehicle. A reason for this is that the geometry of a lane can be useful even if the lane connectivity is incorrect. Likewise, the lane connectivity of a lane can be useful even if the geometry is not perfect. This is particularly useful for path-planning purposes, e.g. as part of a Navigation system of the vehicle or as a Pilot Assist function of the ADS.

The lane connectivity layer, as further explained below, can be seen as a separate layer, which can be added on top of the HD map. The lane connection layer may then serve as a confirmation/verification layer for the lane connectivity of the HD map, or represent a confidence level of lane connections in the HD map. It provides a solution that is easy to maintain (i.e. adding/removing lane connections, or otherwise updating existing ones), and does not require the same extensive validation/verification as when updating the HD map. Instead, the lane connectivity layer can be sourced from a fleet of vehicles, and updated more frequently. Furthermore, it can be represented in a simple way, making it easy to process in a vehicle, and to distribute between vehicles, or between a vehicle and a server.

The disclosed technology is at least partly based upon the realization that is it easier to disqualify data than it is to build new correct data. From a consumer vehicle point of view, it would be more difficult, more time consuming, and require a larger fleet or even require using purpose-made mapping vehicles to build a correct HD map. However, what a fleet of consumer vehicles can do, is to detect and report errors in the HD map (compared to the real-world as perceived by the vehicles), formalize this in a lane connectivity layer, and leverage this in the operation of the vehicle. Moreover, the lane connectivity layer can make this information useful even if it is not good enough or trustworthy enough to correct to the HD map. In other words, it is possible to use the detections even though not enough information to confidently correct the HD map is available. A reason for this is that its mere existence (i.e. knowing that there is a possible error in the lane connectivity) may provide sufficient information for the ADS to make a better decision in the control of the vehicle. Further, when used together with other information, it can provide even more value to the ADS.

### Definitions

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while AD systems aim to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth. The disclosed technology is applicable to any vehicle equipped with an ADS. In other words, the disclosed technology find applicability in both autonomous vehicles (i.e. vehicles capable of operating in fully autonomous mode, without human intervention) and semi-autonomous vehicles (i.e. vehicles being capable of operating at the lower autonomy levels, such as driver assistance functions).

As stated above, the disclosed technology at least partly relates to the task of path planning. Path planning herein refers to the process by which an autonomous (or semi-autonomous) vehicle determines a safe, efficient, legal, and feasible path (along a set of lane segments) to reach a specified destination. This process may involve identifying a sequence of roads and lane segments to follow, considering factors such as the road network, lane-level information, traffic conditions, traffic rules, etc. As explained in the foregoing, path planning typically relies at least on HD maps, to make the decisions. Further information such as driver preferences, traffic data, travel time, energy consumption, etc. may be considered as well. It is to be noted that path planning finds applicability at different levels of autonomy. It can for instance be implemented as part of a navigation system for determining a planned route on a lane-level from point A to point B. It can also be used in a pilot assist function for autonomously driving the vehicle.

High-Definition (HD) maps is one of the two most commonly used maps in the field of autonomous driving, with the other being Standard-Definition (SD) maps. These maps differ e.g. in detail level, accuracy, and purpose. HD maps have relatively high detailed level and contain highly accurate geometry information, including precise lane boundaries, road curvature, traffic signs, and other essential data for localizing and controlling the vehicle in its lane and when traversing between lanes. These maps are highly accurate because it is mainly used for lane-level control of the vehicle.

In contrast, SD maps offer a lower level of detail, typically focusing on broader road features, such as road network geometry, number of lanes, speed limit, traffic direction, and other road-level data. Because of the global level of information stored in the SD maps, they have large coverage which can be used for route planning or other navigational purposes. Thus, HD and SD maps serve complementary roles in autonomous vehicle systems, with HD maps providing the precise, lane-level information needed for accurate path planning, while SD maps offer more general road-level data that aids in broader planning and decision-making tasks.

In the present context, a "sensor" or "sensor device" refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, and Ultrasonic sensors. LiDAR sensors use laser beams to measure distances and detect static and dynamic objects at longer ranges, and in darkness. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

### Embodiments

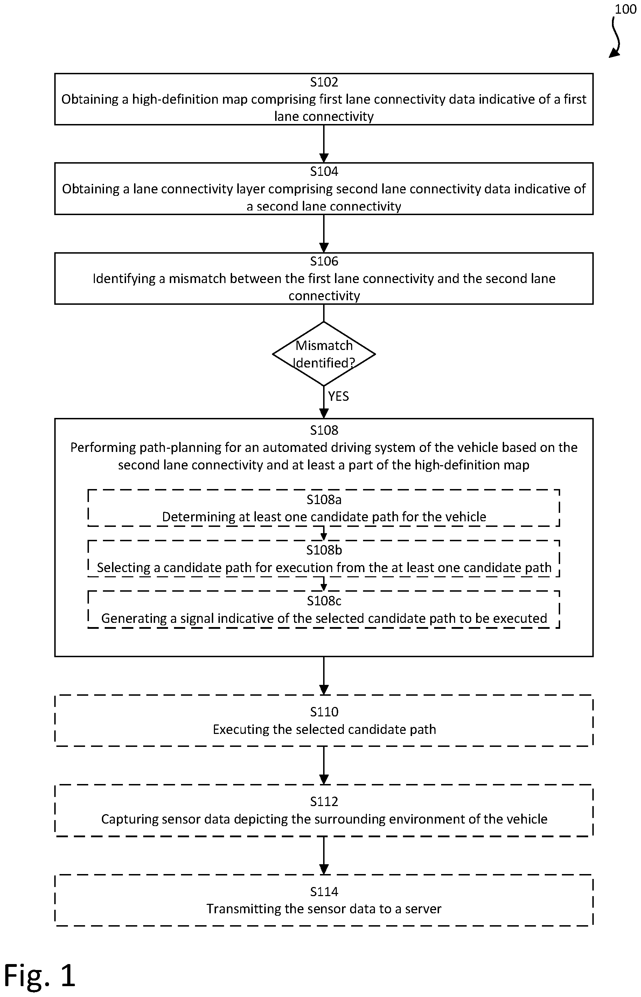

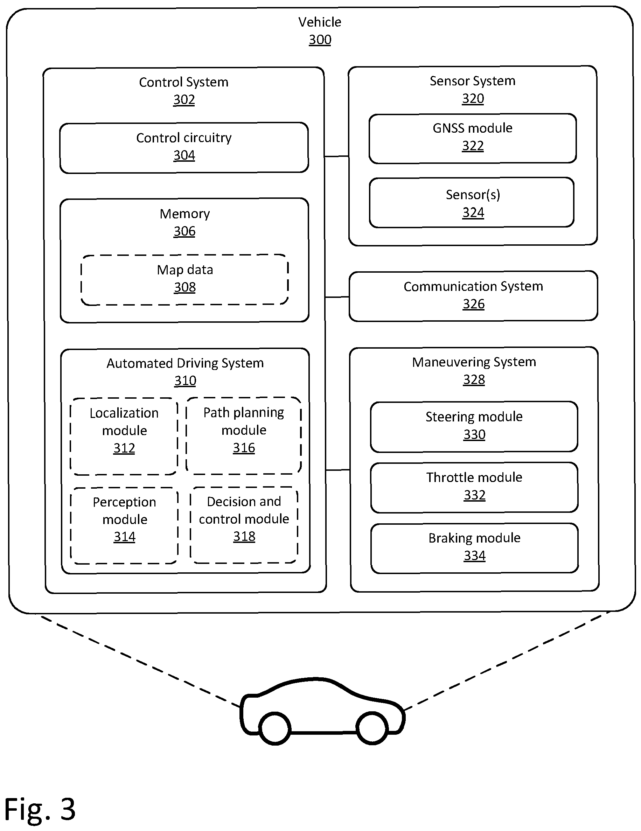

Figure 1 is a schematic flowchart representation of a computer-implemented method 100 for operating a vehicle equipped with an automated driving system, ADS. Operating the vehicle may encompass performing some action associated with the ADS, such as path planning of the vehicle. In other words, the method 100 may be a path planning method 100 of the vehicle, or a method for determining a planned (or future) path for the vehicle. The vehicle may be a vehicle 300 as further described below, in connection with Fig. 3.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art. It should be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination, unless otherwise stated or understood from the context.

The method 100 comprises obtaining S102 a high definition, HD, map of a region based on a current position of the vehicle. In other words, the HD map may cover a region determined in view of the current position of the vehicle. The region may for instance be a region around the current position of the vehicle. In another example, the region may be a region ahead of the vehicles current position.

The HD map comprises geometry data describing a geometry of a plurality of lane segments making up the road network within the region. The geometry herein refers to the physical characteristics of the lane segments, such as their shape, width, curvature, and location in space. The geometry data can thus be seen as any data defining the layout of the lanes, such as their boundaries, centerlines, curvature, etc. A lane segment can be understood as a contiguous portion of a lane of a stretch of road within the road network. Thus, a series of consecutive lane segments can together form the lane of the stretch of road. By dividing a lane into segments, the ADS can process the information more efficiently, enabling finer-grained control and decision making. The length of a lane segment may vary, depending on a specific realization. In some embodiments, the road network can be divided into a plurality of lane segments of equal lengths. In alternative embodiments, the lane segments of the plurality of lane segments may have different lengths. The length of lane segments may range from a few meters to tens or even hundreds of kilometers. For instance, a lane segment may be defined as the entire length of a lane from one intersection/branching/merging (or similar) to the next. I.e., between to changes of the lane. The length of the lane segments may then depend on the driving environment. For example, in urban environments, this may correspond to a few up to hundreds of meters. In rural environments (e.g. country roads), this may correspond to a few kilometers to tens of kilometers. In highway environments, this may correspond to tens or hundreds of kilometers. However, in some embodiments, the length of a lane from one intersection/branching/merging to the next can be divided into several smaller lane segments or any suitable length.

The HD map further comprises first lane connectivity data indicative of a first lane connectivity between the plurality of lane segments. In the present context, the wording "lane connectivity" can be understood as information describing how the plurality of lane segments relate to each other (e.g. though merging, splitting or intersecting). Or put differently, how they are connected to each other. Each lane segment may for instance be associated with information about connections to one or more preceding lane segments, and to one or more succeeding lane segments. The lane connectivity may further comprise information of how adjacent lanes relate to each other.

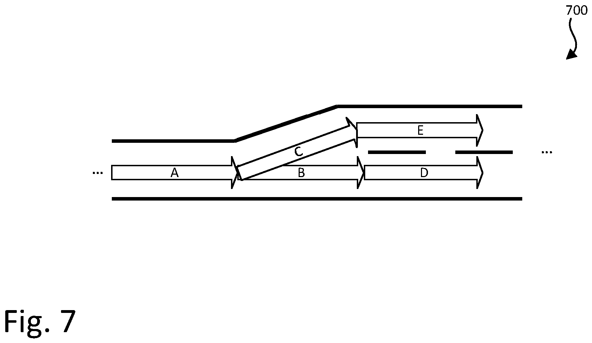

More specifically, the lane connectivity may be indicative of a respective set of permissible transitions between pairs of lane segments. Put differently, each lane segment of the plurality of lane segments may be associated with one or more permissible transitions to other lane segments. An illustrative example is shown in Fig. 7, which shows a portion of a road network 700. Here, the arrows represent respective lane segments denoted A-E. Lane segment A has a permissible transition to lane segment B and to lane segment C (as indicated by their physical connection in Fig. 7). Lane segment B then has a permissible transition to lane segment D, and lane segment C has a permissible transition to lane segment E. The first lane connectivity data may then comprise the set of permissible transitions between pairs of lane segments, which in this example would be: A-to-B, A-to-C, B-to-D, and C-to-E. In another example, the first lane connectivity data may comprise the permissible transitions from each lane segment, which in this example would be: A: B or C, B: D, and C: E. In this example, only succeeding lane connections are included. It is however to be noted that the lane connectivity data may comprise information about preceding lane connections as well.

A permissible transition between a pair of lane segments may be a transition that can be legally performed by the vehicle. The wording "legally" herein refers to what is legal considering whatever traffic regulations or laws that apply. As a non-limiting example, two lane segments may be physically connected, but still not constitute a legal transition. It can for instance be a lane that transitions into a bus lane, or a lane that narrows down and only permits vehicles under a certain width.

Alternatively, or in combination, a permissible transition between a pair of lane segments may be a transition that is physically possible to perform by the vehicle. An example of why this may be needed is that two adjacent lane segments running in next to each other, but actually be separated by a traffic island, a curb, or similar, and would thus not constitute a permissible transition, despite being adjacent lanes.

The first lane connectivity data is derived at least partly based on the geometry data. In other words, the first lane connectivity can be determined based at least partly on the geometry data. More specifically, the first lane connectivity data (or the first lane connectivity thereof) may be derived based on a structural relationship between the plurality of lane segments in the geometry data. The first lane connectivity data may be further derived based on regulatory or legal information available in the HD map. For example, the HD map may comprise information about relevant traffic signs, or other signage. The first lane connectivity data is thus derived based on the information available in the HD map, and thus how the world looked like at the time when the HD map was created or last updated.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. Obtaining S102 the HD map of the region may for instance encompass retrieving (at least a portion of) the HD map from a memory or storage of the vehicle covering at least the region.

The method 100 further comprises obtaining S104 a lane connectivity layer associated with the region. The lane connectivity layer comprises second lane connectivity data indicative of a second lane connectivity between at least a subset of the plurality of lane segments of areas in the region associated with one or more potential errors in the HD map. The one or more potential errors may be related to a certain area within the region. The lane connectivity layer may e.g. be stored as a layer separate to the HD map in the vehicle.

The second lane connectivity data may comprise the second lane connectivity for only a subset of the plurality of lane segments, specifically the subset which may be associated with one or more potential errors in the HD map. Thus, the lane connectivity layer may in some embodiments cover (i.e. comprise information about the lane connectivity) only the areas of the potential errors. It is however to be noted that the second lane connectivity data may also comprise second lane connectivity of all of the plurality of lane segments. In other words, the lane connectivity layer may have the same coverage as the first lane connectivity data.

The potential errors in the HD map may arise due to inaccuracies, changes in real-world conditions, or limitations in data collection and processing. In general, the potential errors in the HD map may relate to any aspect which makes it uncertain whether or not the vehicle can be operated based on the HD map, in the area where the potential errors are located. The potential errors may e.g. relate to errors in the geometry data of the HD map, i.e. in terms of incorrect representation of lane shapes, widths, curvature, etc. Alternatively, or in combination, the potential errors may relate to errors in view of the traffic regulations in force in the area. Other potential errors in the HD map may be present as well. The potential errors may or may not affect the representation of how lanes or roads are connected, such as missing lane segments or links between lane segments. The errors may be "potential" in the sense that they need not to have been confirmed to the level of confidence required to update the HD map. The potential errors may e.g. be errors that have been reported by vehicles having travelled in the region. It is however to be noted that the potential errors may also encompass well known errors in the HD map, although the HD map has yet to be updated to correct the errors. The area may e.g. correspond to an area around an intersection, off-ramp, etc., or any general area on the HD map where errors may be present.

In some embodiments, the lane connectivity layer can be seen as a topology confirmation layer, comprising an indication of whether a lane connectivity in the HD map, is correct or not. The lane connectivity layer may thus comprise corrections of lane connections existing in the first lane connectivity data. However, the lane connectivity (or rather the second lane connectivity data) may further comprise information about lane connections that does not exist in the first lane connectivity data. Such lane connections may e.g. be new lane connections that has been added since the HD map was created (or last updated). The information of the lane connectivity layer may be used to validate and/or confirm the lane connectivity of the HD map, i.e. whether the first and second lane connectivity data is aligned. With this information present, the confidence of the HD map can be increased, as the HP map then will have been validated by the fleet.

More specifically, the second lane connectivity data of the lane connectivity layer may comprise a label associated with each pair of connected lane segments in the first lane connectivity data. The label may be indicative of whether the connection between said pair of lane segments is correct or not. In some embodiments, the second lane connectivity data comprises only labels for the connections which are incorrect. In other words, the second lane connectivity data may comprise only information indicative of the erroneous lane connections of the first lane connectivity data. In some embodiments, the second lane connectivity data comprises its own lane connections, in the same way as the first lane connectivity data. In other words, the second lane connectivity data may comprise information indicative of permissible transitions between pairs of lane segments. Thus, the lane connectivity layer may comprise complete lane connectivity data, which may be independent of the HD map and the first lane connectivity data thereof. In conclusion, the second lane connectivity data may comprise different types of data, all indicative of the second lane connectivity.

The lane connectivity layer can be a fleet-sourced lane connectivity layer. More specifically, the lane connectivity layer may be generated based on reports from a fleet of vehicles having travelled through the region. In other words, vehicles that have travelled along the lane segments may generate reports indicative of a believed lane connectivity, and whether this differs from the first lane connectivity data. The fleet of vehicles may transmit the reports of potential misalignments between the first lane connectivity data and a lane connectivity as determined by a perception system of the vehicle, as a cause of one or more potential errors in the HD map. Thus, the reports may be indicative of errors in the first lane connectivity data as determined by a perception system of a vehicle having generated the report. Put differently, a vehicle of the fleet may detect the potential misalignments in lane connectivity by comparing the first lane connectivity with a perceived lane connectivity, and in response to this transmit the report. In some embodiments, a potential error in the HD map, or a potential misalignment in lane connectivity, may be detected in response to detecting a driving maneuver deviating from the HD map. The driving maneuver may either be performed by the ADS, or by a driver of the vehicle when operating the vehicle in manual mode. Thus, detecting a deviation between the driving maneuver and the HD map may serve as a trigger for collecting sensor data of the environment for further processing to determine if there is a misalignment between a perceived lane connectivity and the first lane connectivity, and/or as a trigger for transmitting a report to the server.

The reports may be transmitted to a remote (to the vehicle) server, configured to manage the lane connectivity layer. More specifically, the server may be configured to aggregate reports from the fleet of vehicles, update the lane connectivity layer, and distribute it to the fleet. The lane connectivity layer can thus be continuously updated as more recent reports from the fleet of vehicles are obtained. This can be done at a higher frequency than the frequency at which the HD map is updated. Updating the lane connectivity layer may be performed after having received a certain number of reports, indicating the same misalignment/error. Alternatively, the server may trigger data collection from a purpose-made mapping vehicle that is dispatched to the area, and updating the lane connectivity layer based on data collected by said mapping vehicle.

The method 100 further comprises identifying S106 a mismatch between the first lane connectivity and the second lane connectivity in an area of the region, based on a comparison between the HD map and the lane connectivity layer. The comparison between the HD map and the lane connectivity layer may be done continuously (e.g. at regular or irregular intervals) as the vehicle navigates the road. Depending on how the lane connectivity layer is represented, the comparison between the HD map and the lane connectivity layer may differ. For example, it may comprise assessing whether the first lane connectivity in the area is the same as the second lane connectivity, or not. In another example, where the second lane connectivity data comprises indications on whether the first lane connectivity is correct or not, the comparison may comprise accessing the second lane connectivity data for the area to see if there exist any labels indicative of an incorrect connection.

The method 100 further comprises, in response to identifying the mismatch, performing S108 path-planning for the ADS in the area based on the second lane connectivity of the second lane connectivity data in combination with at least a part of the HD map of the area. The second lane connectivity may then be used instead of the first lane connectivity. In other words, the path-planning of the ADS can be performed based on the HD map, except the second lane connectivity may replace the first lane connectivity of the HD map (i.e. where the first lane connectivity is found to be erroneous). The path planning may still be performed mainly based on the HD map, but with the additional information of the second lane connectivity data. It is to be appreciated that the path-planning S108 involves long-term planning of the future path for the vehicle, beyond sensor range. As the vehicle is getting closer to the area of the potential error(s), it may operate the actual maneuvering mainly based on the perception system, and potentially with the help of the HD map.

The step of performing S108 path-planning for the ADS may comprise the following sub-steps (denoted S108a to 108c). Determining S108a at least one candidate path for the vehicle, based on the second lane connectivity of the second lane connectivity data in combination with the at least a part of the HD map of the area. Selecting S108b, from the at least one candidate path, a candidate path for execution. And generating S108c a signal indicative of the selected candidate path to be executed by the ADS. Selecting S108b the candidate path for execution may be based on some quality metric and/or safety/risk metric associated with each of the candidate paths.

The method 100 may further comprise executing S110 the selected candidate path by the ADS. Executing S110 the selected candidate path may e.g. be performed by sending the signal indicative of the selected candidate path to a decision and control module of the vehicle. The decision and control module may determine a vehicle trajectory, based on the candidate path to be executed, and operate the vehicle according to the trajectory.

The "path" (as in candidate path) may be understood as a geometric or spatial course or line that the vehicle travels along. It can be represented by a sequence of positions (e.g., in two- or three-dimensional space) of the vehicle over a certain distance. By the wording "trajectory" of the vehicle, it is herein meant a time-dependent (or temporal) path of the vehicle. More specifically, the trajectory may include not only the spatial positions (similar to the path) but also the vehicle's dynamics, such as velocity, acceleration, and orientation at each point along the path, and over time. It may thus define when and how the vehicle should move along the path, considering time, speed profiles, and smooth transitions between points. The trajectory can thus be seen as a spatiotemporal path.

The method 100 may further comprise: capturing S112 sensor data depicting the surrounding environment of the vehicle as it travels through the area; and transmitting S114 the sensor data to a server for verification of the potential error in the HD map associated with the area and/or for updating the second lane connectivity data of the lane connectivity layer. In other words, the steps denoted S112 and S114 may enable the server to obtain more information about already existing errors in the HD map, or misalignments between the first and second lane connectivity. It is to be noted that the vehicle may travel through the area either based on a planned path of the vehicle, or by being driven manually by a driver of the vehicle. The latter may e.g. occur if the driver decides to intercept, or is prompted to take over, due to uncertainty in the correctness of the HD map.

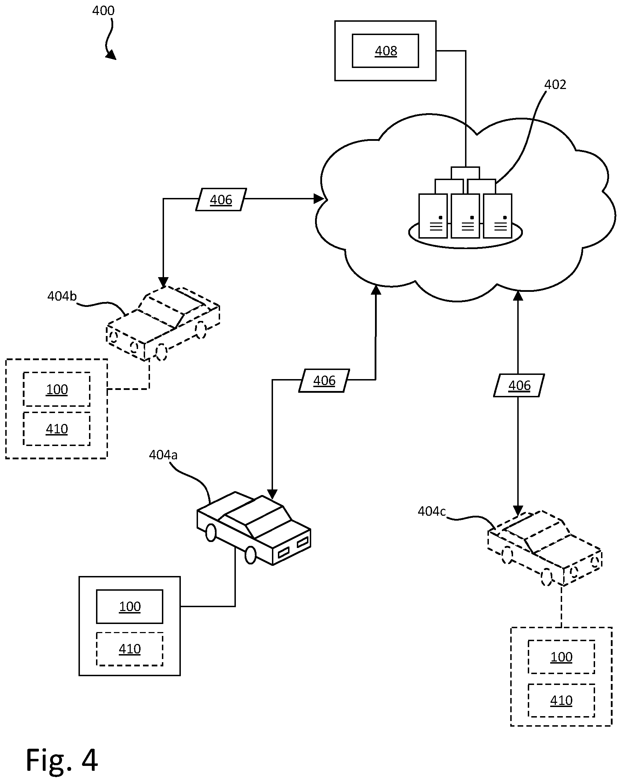

In some embodiments, the vehicle may detect new potential errors in the HD map, or misalignments between the first lane connectivity of the HD map and the lane connectivity layer. This may be detected by processing of the captured sensor data of the surrounding environment. In response to detecting such error or misalignment, the vehicle may transmit information indicative of said error or said misalignment to the server. Aspects relating to the interaction between the vehicle and the server will be further explained below, in connection with Fig. 4.

The surrounding environment of the vehicle can be understood as a general area around the ego-vehicle in which objects (such as other vehicles, landmarks, obstacles, etc.) can be detected and identified by vehicle sensors (radar, LIDAR, cameras, etc.), i.e. within a sensor range of the ego-vehicle.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

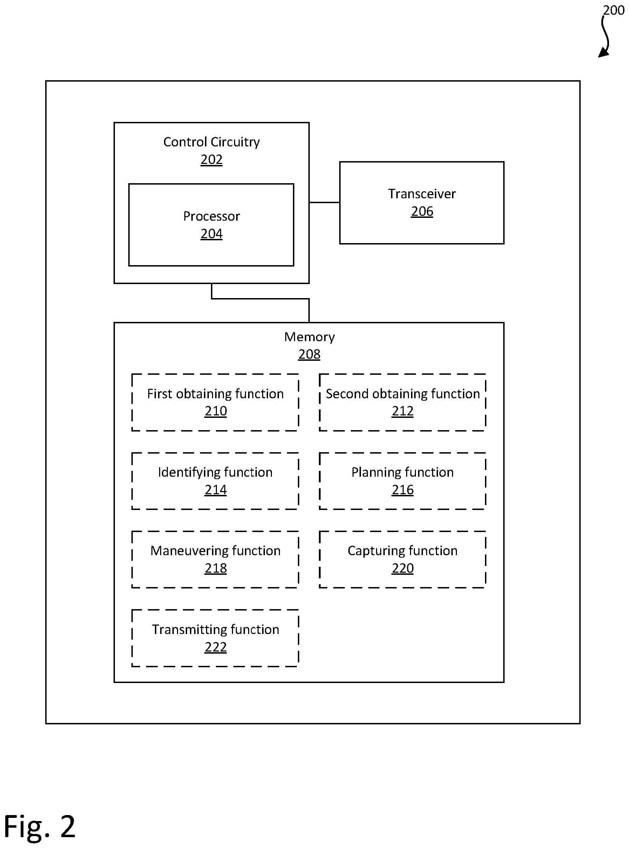

Figure 2 is a schematic illustration of a computing device 200, in accordance with some embodiments of the disclosed technology. The computing device 200 may be configured to perform the method 100 as described in connection with Fig. 1. Thus, the computing device 200 may thus be a computing device 200 for operating the vehicle equipped with the automated driving system, ADS.

The computing device 200 as described herein, refers to a computer system, or any device or general computing system configured to perform various functions. Even though the computing device 200 is herein illustrated as one device, the computing device 200 may be a distributed computing system, formed by a number of different devices.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as vehicles or other devices. The transceiver 206 may both transmit data from and receive data to the computing device 200.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to obtain a high definition, HD, map of a region based on a current position of the vehicle. This may be performed e.g. by execution of a first obtaining function 210. The HD map comprising geometry data describing a geometry of a plurality of lane segments making up the road network within the region. The HD map further comprises first lane connectivity data indicative of a first lane connectivity between the plurality of lane segments, derived at least partly based on the geometry data.

The control circuitry 202 is further configured to obtain a lane connectivity layer associated with the region. This may be performed e.g. by execution of a second obtaining function 212. The lane connectivity layer comprises second lane connectivity data indicative of a second lane connectivity between at least a subset of the plurality of lane segments of areas in the region associated with one or more potential errors in the HD map. It is to be appreciated that the first obtaining function 210 and the second obtaining function 212 may be implemented either as a common obtaining function, or two separate obtaining functions.

The control circuitry 202 is further configured to identify a mismatch between the first lane connectivity and the second lane connectivity in an area of the region, based on a comparison between the HD map and the lane connectivity layer. This may be performed e.g. by execution of a identifying function 214.

The control circuitry 202 is further configured to, in response to identifying the mismatch, perform path-planning for the ADS in the area based on the second lane connectivity of the second lane connectivity data in combination with at least a part of the HD map of the area. The second lane connectivity may be used instead of the first lane connectivity. This may be performed e.g. by execution of a planning function 216.

The control circuitry 202 may be further configured to execute the selected candidate path by the ADS. This may e.g. be performed by execution of a maneuvering function 218.

The control circuitry 202 may be further configured to capture sensor data depicting the surrounding environment of the vehicle as it travels through the area. This may e.g. be performed by execution of a capturing function 220.

The control circuitry 202 may be further configured to transmit the sensor data to a server for verification of the potential error in the HD map associated with the area and/or for updating the second lane connectivity data of the lane connectivity layer. This may e.g. be performed by execution of a transmitting function 222.

It should be noted that the principles, features, aspects, and advantages of the method 100 as described above in connection with Fig. 1, are applicable also to the computing device 200 as described herein. In order to avoid undue repetition, reference is made to the above. Hence, the control circuitry may be configured to perform any of the steps as described as part of the method 100.

Figure 3 is a schematic illustration of a vehicle 300 in accordance with some embodiments. The vehicle 300 may be equipped with an Automated Driving System (ADS) 310. As used herein, a "vehicle" is any form of motorized transport. For example, the vehicle 300 may be any road vehicle such as a car (as illustrated herein), a motorcycle, a (cargo) truck, a bus, a smart bicycle, etc. The vehicle 300 is configured to perform the steps of the method 100 as described above. Put differently, the computing device 200 may be provided as part of the vehicle 300. Thus, any principles, features, aspects, and advantages of the method 100 or the computing device 200 as described above in connection with Fig. 1 and 2, are applicable also to the vehicle as described herein.

The vehicle 300 comprises a number of elements which can be commonly found in autonomous or semi-autonomous vehicles. It will be understood that the vehicle 300 can have any combination of the various elements shown in Fig. 3. Moreover, the vehicle 300 may comprise further elements than those shown in Fig. 3. While the various elements are herein shown as located inside the vehicle 300, one or more of the elements can be located externally to the vehicle 300. Further, even though the various elements are herein depicted in a certain arrangement, the various elements may also be implemented in different arrangements, as readily understood by the skilled person. It should be further noted that the various elements may be communicatively connected to each other in any suitable way. The vehicle 300 of Fig. 3 should be seen merely as an illustrative example, as the elements of the vehicle 300 can be realized in several different ways.

The vehicle 300 comprises a control system 302. The control system 302 is configured to carry out overall control of functions and operations of the vehicle 300. The control system 302 comprises control circuitry 304 and a memory 306. The control circuitry 302 may physically comprise one single circuitry device. Alternatively, the control circuitry 302 may be distributed over several circuitry devices. As an example, the control system 302 may share its control circuitry 304 with other parts of the vehicle. The control circuitry 302 may comprise one or more processors, such as a central processing unit (CPU), microcontroller, or microprocessor. The one or more processors may be configured to execute program code stored in the memory 306, in order to carry out functions and operations of the vehicle 300. The processor(s) may be or include any number of hardware components for conducting data or signal processing or for executing computer code stored in the memory 306. In some embodiments, the control circuitry 304, or some functions thereof, may be implemented on one or more so-called system-on-a-chips (SoC). As an example, the ADS 310 may be implemented on a SoC. The memory 306 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 306 may include database components, object code components, script components, or any other type of information structure for supporting the various activities of the present description.

In the illustrated example, the memory 306 further stores map data 308. The map data 308 may for instance be used by the ADS 310 of the vehicle 300 in order to perform autonomous functions of the vehicle 300. The map data 308 comprises high-definition (HD) map data. The map data 308 may further comprise standard-definition (SD) map data. It is contemplated that the memory 308, even though illustrated as a separate element from the ADS 310, may be provided as an integral element of the ADS 310. In other words, according to some embodiments, any distributed or local memory device may be utilized in the realization of the present inventive concept. Similarly, the control circuitry 304 may be distributed e.g. such that one or more processors of the control circuitry 304 is provided as integral elements of the ADS 310 or any other system of the vehicle 300. In other words, according to an exemplary embodiment, any distributed or local control circuitry device may be utilized in the realization of the disclosed technology. The lane connectivity layer may be stored in the memory 306. The lane connectivity layer may be provided as part of the map data 308.

The vehicle 300 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 300. The sensor system 320 may further comprise one or more sensors 324. The one or more sensor(s) 324 may be any type of on-board sensors, such as one or more image sensors (i.e. cameras), LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 300.

The vehicle 300 further comprises a communication system 326. The communication system 326 is configured to communicate with external units, such as other vehicles (i.e. via vehicle-to-vehicle (V2V) communication protocols), remote servers (e.g. as described below in connection with Fig. 4), databases or other external devices, i.e. vehicle-to-infrastructure (V2I) or vehicle-to-everything (V2X) communication protocols. The communication system 326 may communicate using one or more communication technologies. The communication system 326 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 300 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output to a remote location (e.g. remote server, operator or control center) by means of the one or more antennas. Moreover, the communication system 326 may be further configured to allow the various elements of the vehicle 300 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 300 further comprises a maneuvering system 320. The maneuvering system 328 is configured to control the maneuvering of the vehicle 300. The maneuvering system 328 comprises a steering module 330 configured to control the heading of the vehicle 300. The maneuvering system 328 further comprises a throttle module 332 configured to control actuation of the throttle of the vehicle 300. The maneuvering system 328 further comprises a braking module 334 configured to control actuation of the brakes of the vehicle 300. The various modules of the steering system 328 may receive manual input from a driver of the vehicle 300 (i.e. from a steering wheel, a gas pedal and a brake pedal respectively). However, the maneuvering system 328 may be communicatively connected to the ADS 310 of the vehicle, to receive instructions on how the various modules should act. Thus, the ADS 310 can control the maneuvering of the vehicle 300.

As mentioned above, the vehicle 300 comprises an ADS 310. The ADS 310 may be part of the control system 302 of the vehicle. The ADS 310 is configured to carry out the functions and operations of the automated functions of the vehicle 300. The ADS 310 can comprise a number of modules, where each module is tasked with different functions of the ADS 310.

The ADS 310 may comprise a localization module 312 or localization block/system. The localization module 312 is configured to determine and/or monitor a geographical position and heading of the vehicle 300, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS.

The ADS 310 may further comprise a perception module 314 or perception block/system. The perception module 314 may refer to any commonly known module and/or functionality, e.g. comprised in one or more electronic control modules and/or nodes of the vehicle 300, adapted and/or configured to interpret sensory data - relevant for driving of the vehicle 300 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensor data from the sensor system 320. The localization module 312 and/or the perception module 314 may further transmit control instructions to the sensor system 320.

The ADS may further comprise a path planning module 316. The path planning module 316 is configured to determine a planned path of the vehicle 300. This may be done through the steps described above, in connection with Fig. 1. The computing device 200 described in connection with Fig. 2 may be provided as part of the path planning module 316. It is however to be noted, that the computing device 200 may be provided as part of another system as well, or distributed over several systems. The control circuitry 202 of the computing device 200 may for instance be shared by the control circuitry 304 of the vehicle's 300 control system 302. A planned path determined by the path planning module 316 may be sent to the maneuvering system 328 for execution.

The ADS may further comprise a decision and control module 318. The decision and control module 318 is configured to perform the control and make decisions of the ADS 310. For example, the decision and control module 318 may decide on whether the planned path determined by the path-planning module 316 should be executed or not. The decision and control module 318 may be further configured to detect any deviating behavior of the vehicle, such as deviations from the planned path, or expected trajectory of the path planning module 316. This includes both evasive maneuvers performed by the ADS 310 and by a driver of the vehicle.

It should be understood that parts of the described solution may be implemented either in the vehicle 300, in a system located external to the vehicle, or in a combination of internal and external to the vehicle; for instance, in a server in communication with the vehicle, a so-called cloud solution. The different features and principles of the embodiments may be combined in other combinations than those described. Further, the elements of the vehicle 300 (i.e. the systems and modules) may be implemented in different combinations than those described herein.

Figure 4 illustrates, by way of example, a system 400 according to some embodiments. More specifically, a system 400 being configured to implement the principles of the presently disclosed technology. The system 400 should therefore be seen as a non-limiting example of a realization of the herein disclosed aspects of the present technology. For instance, the system 400 may be configured to perform the method 100 described in connection with Fig. 1. Thus, any features or principles described above are applicable also to the system 400 as described herein, and vice versa.

The system 400 comprises a server 402 (or remote, cloud, central, back-office, fleet, or back-end server), referred to in the following as the remote server 402 or just server 402. As illustrated, the server 402 may be provided in the cloud, i.e. as a cloud-implemented server. Advantageously, the server 402 may manage and maintain data relevant for a fleet of vehicles (further described below), or manage and coordinate the fleet of vehicles, such as aggregating data from, or distributing data to, the different vehicles of the fleet, updating ADS functions and distributing the updates to the fleet, etc. In particular, the server 402 may be configured to provide the fleet of vehicles with the lane connectivity layer as described in the foregoing.

The system 400 further comprises one or more vehicles 404a-c, also referred to as a fleet of vehicles 404a-c. The one or more vehicles 404a-c may be vehicles 300 as described above in connection with Fig. 3. The one or more vehicles 404a-c may thus be configured to perform the method 100 described above in connection with Fig. 1. The fleet illustrated in Fig. 4 comprises three vehicles, a first, second and third vehicle 404a-c, by way of example. The system 400 may however comprise any number of vehicles 404a-c. In the following, reference will mainly be made to the first vehicle 404a, however the same aspects apply also to the other vehicles of the fleet of vehicles.

The one or more vehicles 404a-c are communicatively connected to the remote server 402. This may provide for transmitting and/or receiving data 406 between the vehicles and the server. The one or more vehicles 404a-c may be further communicatively connected to each other. The data 406 may be any kind of data, such as communication signals, instructions, system updates, evaluation data, etc. More specifically, the data 406 may comprise the lane connectivity layer (or updates thereof), information indicative of errors in the HD map, or misalignments in lane connectivity between the lane connectivity layer and the HD map, or between a perceived lane connectivity and the HD map, sensor data captured by the vehicles, etc.

The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to mid-ranged communication protocols, such as Wireless Local Area Network (WLAN) (e.g. IEEE 802.11) based solutions. The sever 402 comprises a suitable memory and control circuitry, for example, one or more processors or processing circuitry, as well as one or more other components such as a data interface and transceiver. The server 402 may also include software modules or other components, such that the control circuity can be configured to execute machine-readable instructions loaded from memory to implement the steps of the method to be performed.

As mentioned above, the server 402 may be configured to manage or maintain the lane connectivity layer. In other words, the server may be configured to keep the lane connectivity layer up-to-date, and distribute it to the fleet of vehicles 404a-c. The server may be configured to perform a computer-implemented method 408 for generating a lane connectivity layer. The method 400 may provide for continuous validation of the lane connectivity in an HD map. The method 408 comprises receiving, from one or more vehicles of a fleet of vehicles, reports indicative of errors in the first lane connectivity data of the HD map. The reports being generated in response to a vehicle having detected a misalignment between the first lane connectivity and a perceived lane connectivity, as determined by a perception system of the vehicle. The reports may further comprise a geographical location of the area in which the misalignment was detected. The reports may further comprise identification data of one or more lane segments associated with the misalignment, or of any other object associated with the incorrectness in the HD map. As an example, IDs of the lane segment or pair of lane segments which as associated with an incorrect connection may be included in the reports. The method 408 further comprises aggregating the reports from the one or more vehicles. The method 408 further comprises consolidating the aggregated reports in the lane connectivity layer, upon a defined number of reports have been received for the same area, and/or for the same erroneous lane connectivity in the HD map. Thereby, generating the lane connectivity layer. The method 408 may further comprise transmitting the lane connectivity layer to the fleet of vehicles. As explained in the foregoing, the lane connectivity layer may be provided separate from the HD map to which it relates. This enables the lane connectivity layer to be updated more frequently, than the frequency at which the HD map is typically updated. In some embodiments, the defined number of reports may be set to 1. Thus, it may be enough with one reported misalignment to update the lane connectivity layer. In some embodiments, the defined number of reports may be more than one, to provide for increased confidence in that the detected misalignment is correctly detected. Put differently, the method 408 may comprise aggregate and formalize reports of erroneous lane connections in the HD map (e.g. by marking erroneous lane connections as incorrect lane connections) into an updated lane connectivity layer, and then supply the updated lane connectivity to the fleet of vehicles.

Similarly, the vehicles 404a-c may be further configured to perform a computer-implemented method 410 for generating a lane connectivity layer. The method 410 can be seen as a method corresponding to what happens at the vehicle side, in connection with the method 408.

The method 410 comprises obtaining sensor data depicting a surrounding environment of the vehicle, as the vehicle navigates a road network. The method 410 further comprises determining a perceived lane connectivity data indicative of a perceived lane connectivity of a set of lane segments present in the surrounding environment of the vehicle. This may be done by processing the sensor data through the perception system of the vehicle. The method 410 further comprise comparing the perceived lane connectivity with the first lane connectivity of the HD map. The method 410 further comprises, in response to detecting a discrepancy between the perceived lane connectivity and the first lane connectivity of the HD map, transmitting a report, comprising information indicative of the discrepancy to the server. In some embodiments, a report of a potential error in lane connectivity (or in the HD map in general) may be transmitted to the server, in response to detecting an abnormal driving behavior or a maneuver deviating from the HD map, when the vehicle 404a is being manually driven (i.e. by the driver of the vehicle). In other words, the vehicle 404a need not to be operated in autonomous or semi-autonomous mode for contributing to the generation of the lane connectivity layer. Simply detecting that the driving behavior of the driver deviates from what is normal/expected, may be used as a trigger for potentially having detected an error in the HD map. This may either trigger a report to the server, or trigger collection of sensor data. The sensor data may then be processed as described above, or transmitted directly to the server.

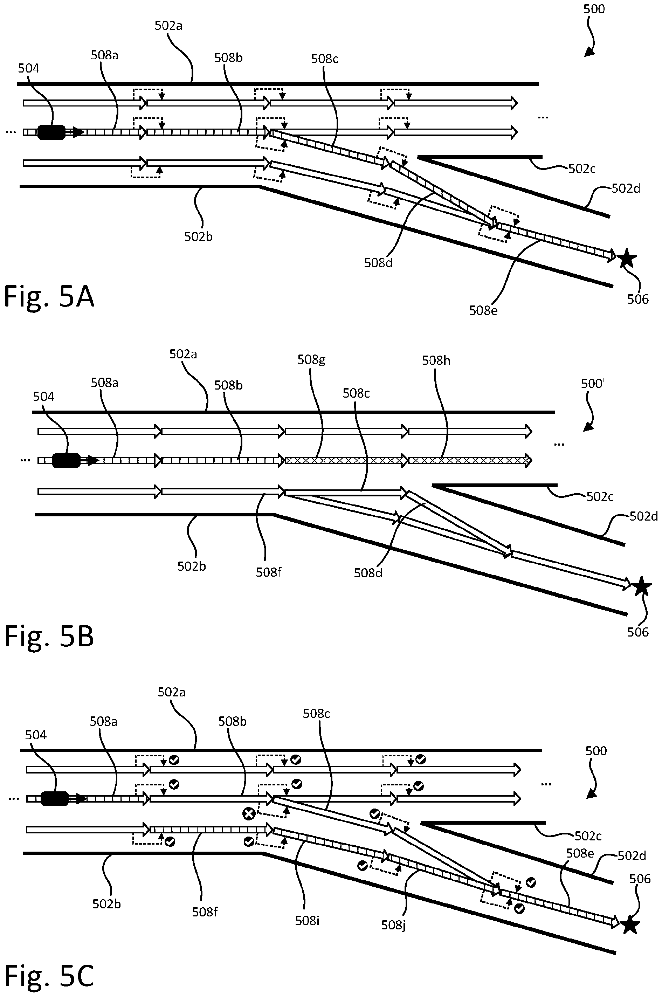

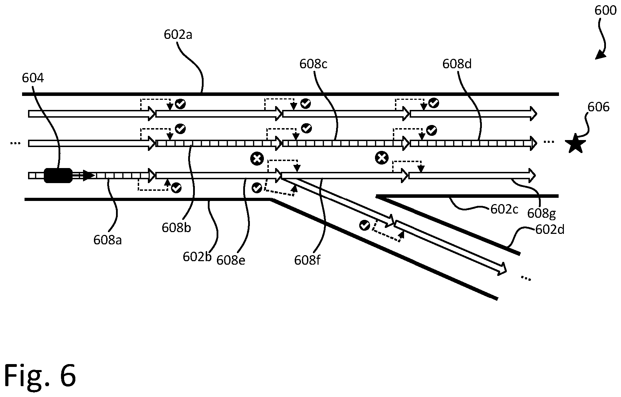

Figure 5A to 5C shows a first illustrative example some aspects of the disclosed technology. More specifically, Figs. 5A to 5C illustrates a case where a lane connection of an HD map is physically wrong, i.e. where the geometry data of the HD map is incorrect. Figure 6 then shows a second illustrative example, in which the physical connections of the HD map is correct, but where the legal restrictions are not.

Looking first at Fig. 5A, is it shown a portion of a road network 500 as represented in an HD map. More specifically, it shows a portion of a road, defined by a plurality of lane boundaries 502a-d. The road portion of the illustrated example can be seen as a portion of a highway, with an off-ramp, splitting the high-way into two.

As explained in the foregoing, the road network can be made up by a number of lane segments, herein represented by bold arrows. Based on the start and end of each lane segment, the first lane connectivity data can be derived. More specifically, the first lane connectivity defining how the individual lane segments are connected to each other can be derived. The lane connectivity is herein represented by the arrows in dashed lines. In other words, each dashed line indicates a permissible transition from one lane segment to another lane segment (according to the first lane connectivity data).

Further shown in Fig. 5A is a vehicle 504 travelling along the road. The vehicle 504 is currently travelling on the lane segment denoted 508a, and with the intention to drive to the target 506, indicated by a star.

If the vehicle 504 were to perform path planning based on the first lane connectivity data of the HD map as represented in Fig. 5A, it may determine a planned path along the lane segments with a striped fill pattern (i.e. the lane segments denoted 508a-e).

However, the representation of the road network 500 according to the HD map comprises an error. Fig. 5B instead shows the actual layout of the road network 500', according to how it looks in the real world. In other words, Fig. 5B shows a representation of the road network 500' according to a correct map.

As shown herein, the lane segment denoted 508c actually connects the lane segments denoted 508f and 508d. So, if the vehicle 504 would execute the planned path, it would first follow the lane segments denoted 508a and 508b, but then be forced to follow the lane segments denoted 508g, and 508h (indicated by crossed fill pattern). This would mean that the vehicle 504 misses the off-ramp, and fails to reach the target.

How the disclosed technology proposes to solve this is shown in Fig. 5C. Here, the lane connectivity layer has been added, which comprises second lane connectivity data indicative of a second lane connectivity. In the illustrated example, the second lane connectivity data is represented by labels for each lane connection of the first lane connectivity data, indicating whether the lane connection is correct (shown by a check-mark) or incorrect (shown by a cross). However, as described above, the second lane connectivity data of the lane connectivity layer may be represented in other ways as well.

By knowing beforehand that the lane connection from the lane segment denoted 508b to the lane segment denoted 508c is incorrect, the vehicle is able to plan around this during the path planning process. The vehicle can then plan to follow the lane segments denoted 508a, 508f, 508i, 508j, and 508e to reach the target 506. In this way, the vehicle 504 can utilize the HD map representation of the portion of the road network 500, despite it being wrong, by instead utilizing the lane connectivity layer. The other option of actually correcting the geometry data of the HD map would require much more effort and time to do, than utilizing the lane connectivity layer as proposed herein.

Turning now to Fig. 6, which shows the example where the physical connections of the HD map is correct, but where the legal restrictions are not. Fig. 6 shows a portion of a road network 600 similar to that of Fig. 5A-C. Similar to Fig. 5C, Fig. 6 shows the representation of the road network 600 according to the HD map, with the addition of the second lane connectivity data of the lane connectivity layer. As stated above, the physical connections of the lane segments are correct. However, the HD map lacks information that the lane segments denoted 608f and 608g correspond to a bus lane. The vehicle (a car in this case) is thus not allowed to travel along these lane segments. However, the lane connectivity layer can then provide information which indicates that the connection between the lane segments denoted 608e and 608f, and the lane segments denoted 608f and 608g are incorrect. The vehicle 604 is then able to plan a path along the lane segments denoted 608a, 608b, 608c, and 608d, to reach the target 606. Thereby, the vehicle 604 can perform the necessary lane change before it is too late.

It should be noted that the same logic of lane connections between lane segments can also be applied to sideways connection (i.e. lane changes). But to keep the examples simple, this has not been included in Figs. 5A-C, or Fig. 6. Sideways lane connections can for instance be regulated legally through lane markers (e.g. solid lines), or though curbs separating lanes.

The disclosed technology has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for operating a vehicle equipped with an automated driving system, ADS, the method (100) comprises:
obtaining (S102) a high definition, HD, map of a region based on a current position of the vehicle, the HD map comprising geometry data describing a geometry of a plurality of lane segments making up the road network within the region, wherein the HD map further comprises first lane connectivity data indicative of a first lane connectivity between the plurality of lane segments, derived at least partly based on the geometry data;
obtaining (S104) a lane connectivity layer associated with the region, wherein the lane connectivity layer comprises second lane connectivity data indicative of a second lane connectivity between at least a subset of the plurality of lane segments of areas in the region associated with one or more potential errors in the HD map;
identifying (S106) a mismatch between the first lane connectivity and the second lane connectivity in an area of the region, based on a comparison between the HD map and the lane connectivity layer; and
in response to identifying the mismatch, performing (S108) path-planning for the ADS in the area based on the second lane connectivity of the second lane connectivity data in combination with at least a part of the HD map of the area.

2. The method (100) according to claim 1, wherein the lane connectivity layer is generated based on reports from a fleet of vehicles having travelled through the region.

3. The method (100) according to claim 1 or 2, wherein the lane connectivity layer is continuously updated as more recent reports from the fleet of vehicles are obtained.

4. The method (100) according to claim 2 or 3, wherein the reports are indicative of errors in the first lane connectivity data as determined by a perception system of a vehicle having generated the report.

5. The method (100) according to any one of the claims 1 to 4, wherein the second lane connectivity data of the lane connectivity layer comprises a label associated with each pair of connected lane segments in the first lane connectivity data, wherein the label is indicative of whether the connection between said pair of lane segments is correct or not.

6. The method (100) according to any one of the claims 1 to 5, wherein the first and second lane connectivity is indicative of a respective set of permissible transitions between pairs of lane segments.

7. The method (100) according to claim 6, wherein a permissible transition between a pair of lane segments is a transition that can be legally performed by the vehicle

8. The method (100) according to claim 6 or 7, wherein a permissible transition between a pair of lane segments is a transition that is physically possible to perform by the vehicle.

9. The method (100) according to any one of the claims 1 to 8, wherein the step of performing (S108) path-planning for the ADS comprises:
determining (S108a) at least one candidate path for the vehicle, based on the second lane connectivity of the second lane connectivity data in combination with the at least a part of the HD map of the area;
selecting (S108b), from the at least one candidate path, a candidate path for execution; and
generating (S108c) a signal indicative of the selected candidate path to be executed by the ADS.

10. The method (100) according to claim 9, further comprising executing (S110) the selected candidate path by the ADS.

11. The method (100) according to any one of the claims 1 to 10, further comprising:
capturing (S112) sensor data depicting the surrounding environment of the vehicle as it travels through the area; and
transmitting (S114) the sensor data to a server for verification of the potential error in the HD map associated with the area and/or for updating the second lane connectivity data of the lane connectivity layer.

12. A computer program product comprising instructions, which when the program is executed by a computing device, causes the computing device to carry out the method (100) according to any one of the claims 1 to 12.

13. A computing device (200) for operating a vehicle equipped with an automated driving system, ADS, the computing device (200) comprising control circuitry (202) configured to:
obtain a high definition, HD, map of a region based on a current position of the vehicle, the HD map comprising geometry data describing a geometry of a plurality of lane segments making up the road network within the region, wherein the HD map further comprises first lane connectivity data indicative of a first lane connectivity between the plurality of lane segments, derived at least partly based on the geometry data;
obtain a lane connectivity layer associated with the region, wherein the lane connectivity layer comprises second lane connectivity data indicative of a second lane connectivity between at least a subset of the plurality of lane segments of areas in the region associated with one or more potential errors in the HD map;
identify a mismatch between the first lane connectivity and the second lane connectivity in an area of the region, based on a comparison between the HD map and the lane connectivity layer; and
in response to identifying the mismatch, perform path-planning for the ADS in the area based on the second lane connectivity of the second lane connectivity data in combination with at least a part of the HD map of the area.

14. A vehicle (300) equipped with an automated driving system, the vehicle (300) comprising the computing device (200) according to claim 13.
